# EUROPEAN PATENT APPLICATION

(11) **EP 3 543 659 A1**
(43) Date of publication of application: **25.09.2019**
(21) Application number: 19163577.0
(22) Date of filing: 18.03.2019
(51) Int. Cl.: G01F 1/68, G01F 15/02, G01L 19/00

(54) **MASS AIR FLOW SENSOR WITH ABSOLUTE PRESSURE COMPENSATION**

(30) Priority: 20.03.2018 US 201815926647
(71) Applicant: Honeywell International Inc., Morris Plains, NJ New Jersey 07950 (US)
(72) Inventor: SORENSON, Richard C., Morris Plains, NJ New Jersey 07950 (US); GILLES, Derek, Morris Plains, NJ New Jersey 07950 (US); HOOVER, William, Morris Plains, NJ New Jersey 07950 (US); SPELDRICH, Jamie, Morris Plains, NJ New Jersey 07950 (US); BENTLEY, Ian, Morris Plains, NJ New Jersey 07950 (US)
(74) Representative: Houghton, Mark Phillip

(57) **Abstract**

A mass flow sensor assembly that contains an absolute pressure sensor for compensating via electronics an output reading of mass flow of a fluid through a channel. The flow and pressure sensors may be built in close proximity to each other in the channel. The mass flow sensor assembly incorporating the absolute pressure sensor may be fabricated using MEMS techniques.

## Description

### Background

The present disclosure pertains to devices for flow measurements of fluids.

### Summary

The disclosure reveals a mass flow sensor assembly that contains an absolute pressure sensor for compensating via electronics an output reading of mass flow of a fluid through a channel. The flow and pressure sensors may be built in close proximity to each other in the channel. The mass flow sensor assembly incorporating the absolute pressure sensor may be fabricated using MEMS (micro electro mechanical systems) techniques.

### Brief Description of the Drawing

Figure 1 is a diagram of a basic layout of a fluid measurement system;
Figure 2 is a diagram of a flow sensor in a channel;
Figure 3 is a diagram of another version of the flow sensor;
Figure 4 is a diagram of an exploded view of a microflow version of an airflow sensor with a barometric pressure sensor;
Figure 5 is a diagram of airflow model of Figure 4 in an assembled fashion;
Figure 6 is a diagram of a pressure sensor having ports different than those of the model in Figure 5;
Figure 7 is a diagram of an exploded view of a product version of an airflow sensor with a barometric pressure sensor;
Figure 8 is another diagram of the exploded view of an airflow sensor;
Figure 9 is a diagram of an exploded view of a product version of an airflow sensor with a barometric pressure sensor;
Figure 10 shows a lower view of the airflow sensor shown in Figure 9;
Figure 11 is a table showing absolute pressure and variation with altitude;
Figure 12 reveals a diagram of equations related to pressure drop or loss of a pipe flow and orifice flow;
Figure 13 is a diagram of an equation pertaining to mass flow;
Figure 14 is a diagram revealing standard conditions and a calculation for mass flow;
Figure 15 is a diagram that shows calculations which note variation in volumetric flow and density due to pressure variation at certain temperature;
Figure 16 is a diagram indicating a variation in pressure drop with a pipe type flow at a certain temperature; and
Figure 17 is a diagram showing a variation in pressure drop at a temperature other than the above indicated certain temperature.

### Description

The present system and approach may incorporate one or more processors, computers, controllers, user interfaces, wireless and/or wire connections, and/or the like, in an implementation described and/or shown herein.

This description may provide one or more illustrative and specific examples or ways of implementing the present system and approach. There may be numerous other examples or ways of implementing the system and approach.

Aspects of the system or approach may be described in terms of symbols in the drawing. Symbols may have virtually any shape (e.g., a block) and may designate hardware, objects, components, activities, states, steps, procedures, and other items. The term "fluid" may refer to a gas or liquid.

When calibrating a mass flow sensor to output in pressure drop, an absolute pressure may be critical to achieving an accurate output from the mass flow sensor. A pressure drop across a part at a given mass flow may change based on changes in the absolute pressure, but the output of the sensor would remain the same. When calibrating a mass flow sensor to an output in pressure drop, the absolute pressure appears critical to achieving an accurate output.

Some people may use analog mass flow sensors that are uncompensated, and are used in applications where a differential pressure is desired. They may look to an upgrade for their next generation of products of digital high resolution compensated sensors. Competitors may make a compensated pressure drop sensor that does not necessarily correct for absolute pressure. This disclosure may exhibit a competitive advantage by providing more accurate performance.

An absolute pressure sense die may be placed either in a sensor flow path or with a pneumatic connection to flow path to measure absolute pressure within the sensor flow path. Absolute pressure may be controlled with sensed pressure data during calibration and the pressure data may be used to mathematically compensate a flow sensor output versus pressure drop for fluctuations in absolute or atmospheric pressure.

The system may have a software component. The sensor may be a hardware device with some embedded software measuring/detecting and transmitting data (e.g., temperature, pressure, motion). Embedded software may run in a device/unit (e.g., firmware).

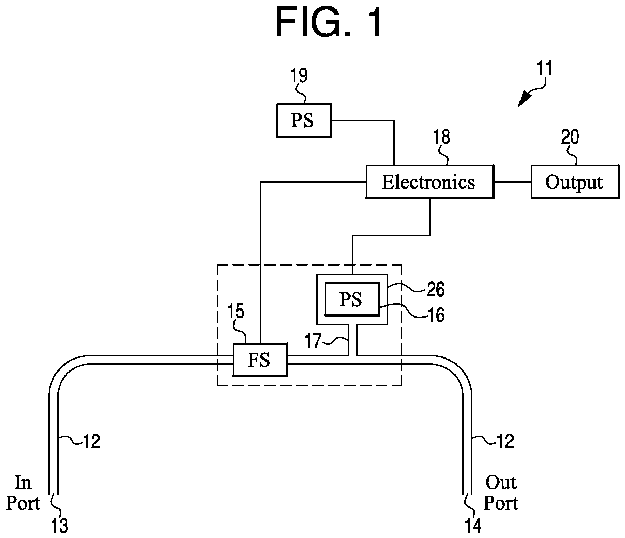

Figure 1 is a diagram of a basic layout 11 of the present system. Layout 11 may have a main flow channel or tube 12, which has an in port 13 at one end and an out port 14 at the other end. A flow sensor 15 may be situated at a position in channel 12 between in port 13 and out port 14. A pressure sensor 16 may be situated in a cavity 26 that has a connection to channel 12 via a tube 17. A signal representing flow of a fluid in channel 12 may go to electronics 18. A signal representing absolute pressure at a position in channel 12 may go to electronics 18. An atmospheric pressure sensor 19 may provide a signal to electronics 18. An output from electronics 18 may provide a flow measurement of fluid in channel 12. The flow measurement may be compensated with absolute pressure measurement. The flow measurement may also be compensated further in view of an atmospheric temperature.

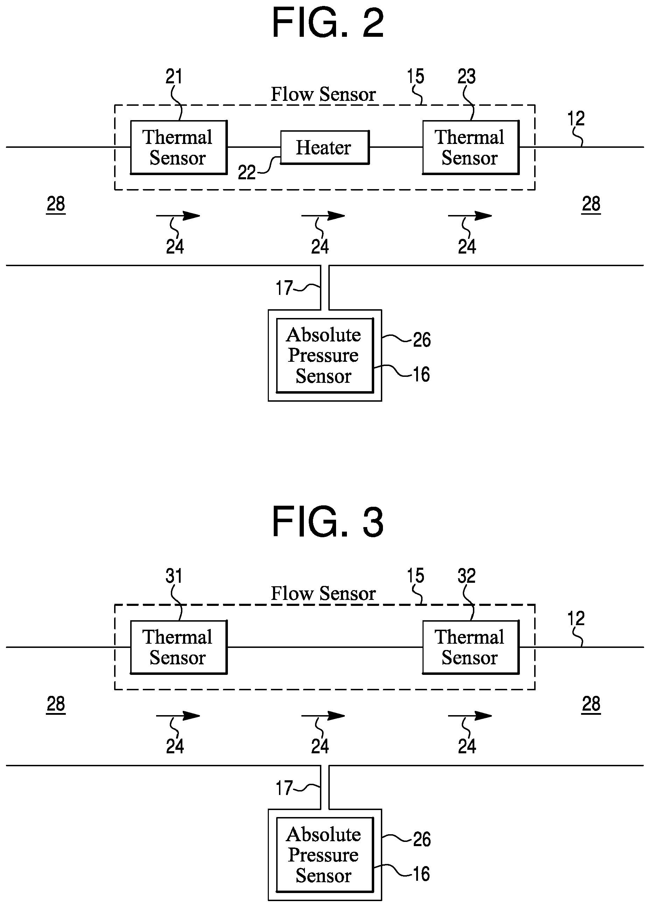

Figure 2 is a diagram of the flow sensor 15 in channel 12. Flow sensor 15 may have a thermal sensor 21, a heater 22, and a thermal sensor 23 in an order downstream, or vice versa. Thermal sensor 21 may detect a temperature T1 of a fluid 28 and its flow 24 in channel 12 at a time t1. A heater 22 may heat fluid 28 to a temperature T2 at time t2. A second thermal sensor 23 may detect a temperature T3 of fluid 28 at t3. The temperature T1, T2 and T3 may be measured at positions p1, p2 and p3, respectively.

Figure 3 is a diagram of another version of flow sensor 15. Sensor 15 does not necessarily have a heater between two sensing resistors as in the diagram of Figure 2. Instead, there are thermal resistors 31 and 32 that are heated. Flow of fluid 28 may produce a difference in the up and downstream resistances of thermal sensors 31 and 32, respectively. The flow 24 rate of fluid 28 may be determined from the difference of the resistances.

When a non-zero fluid flow 24 is present in the fluid channel 12 and the heater element 22 is heated to a temperature higher than the ambient temperature of the fluid in the fluid flow 24, the symmetrical temperature distribution may be disturbed and the amount of disturbance may be related to the flow rate of the fluid flow 24 in the fluid channel 12. The flow rate of the fluid flow 24 may cause the upstream sensor element 21 to sense a relatively cooler temperature than the downstream sensor element 23. In other words, the flow rate of the fluid flow 24 may cause a temperature differential between the upstream sensor element 21 and the downstream sensor element 23 that is related to the flow rate of the fluid flow 24 in the fluid channel 12. The temperature differential between the upstream sensor element 21 and the downstream sensor element 23 may result in an output voltage differential between the upstream sensor element 21 and the downstream sensor element 23.

In another illustrative embodiment, the mass flow and/or velocity of the fluid flow 24 may be determined by providing a transient elevated temperature condition in the heater element 22, which in turn, causes a transient elevated temperature condition (e.g., heat pulse) in the fluid flow 24. When there is a non-zero flow rate in the fluid flow 24, the upstream sensor element 21 may receive a transient response later than the downstream sensor element 23. The flow rate of the fluid flow 24 can then be computed using the time lag between the upstream sensor element 21 and downstream sensor element 23, or between the time the heater is energized and when the corresponding elevated temperature condition (e.g., heat pulse) is sensed by one of the sensors, such as the downstream sensor 23.

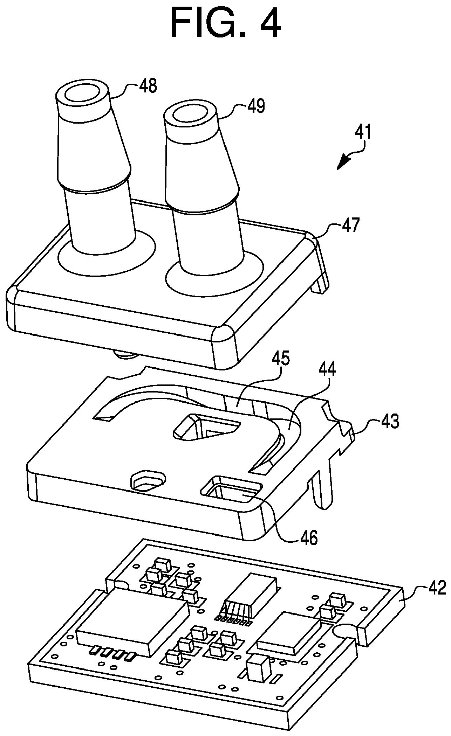

Figure 4 is a diagram of an exploded view of a microflow version of an airflow sensor 41 with a barometric pressure sensor. A base part 42 may contain electronics for sensor 41. A middle part 43 may contain a channel 44 through which a fluid such as air may flow. A flow sensor 45 and a pressure sensor 46 may be situated in part 43. Part 47 may have an input port 48 and an output port 49 that are connected to one end of channel 44 and to another end of channel 44, respectively. Air or some other fluid may flow through the input port 48, channel 44 and output port 49.

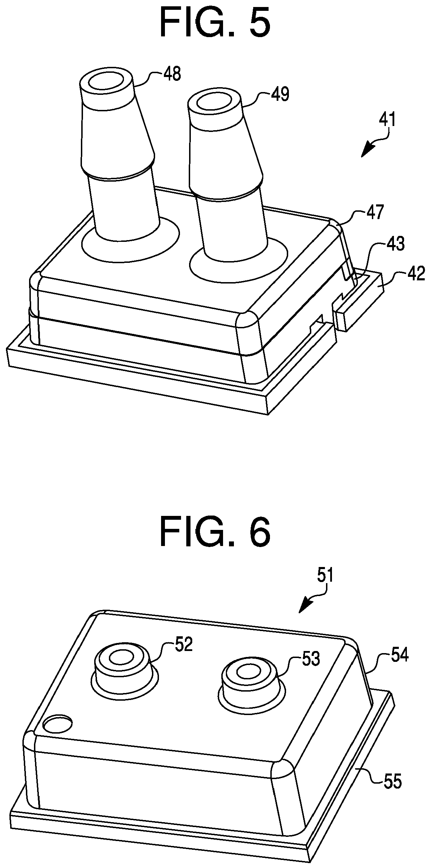

Figure 5 is a diagram of airflow model 41 in an assembled fashion. Figure 6 is a diagram of a pressure sensor 51 having alternate ports 52 and 53. Sensor 51 may have a top part 54 and a bottom part 55. The internal structure of sensor 51 may be similar to that of sensor 41 of Figure 4.

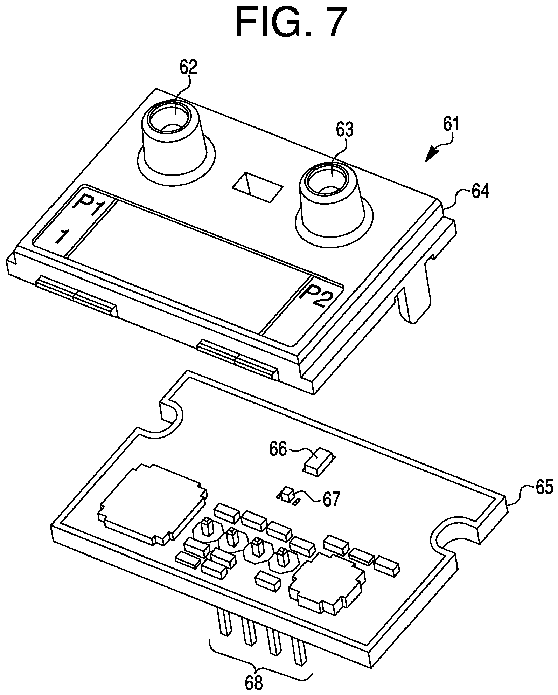

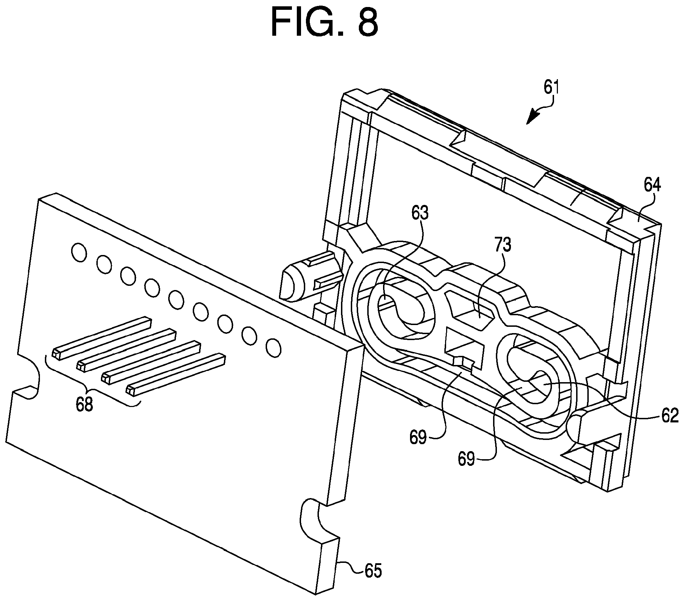

Figure 7 is a diagram of an exploded view of a product version of an airflow sensor 61 with a barometric pressure sensor. Figure 8 is another diagram of the exploded view of airflow sensor 61. The two views of airflow sensor 61 are from upper and lower perspectives, in Figures 7 and 8, respectively. Sensor 61 may have inlet and outlet ports 62 and 63 in a top portion 64. Lower portion 65 may be attached to upper portion 64 to form sensor 61 as a unit. Portion 65 may incorporate a flow sensor 66 and pressure sensor 67. Portion 65 may contain electronics and terminals 68 for sensor 61.

In Figure 8 with the lower perspective of sensor 51, reveals a flow channel 69 for a fluid, such as air, to flow from port 62 to port 63. A cavity 73 for pressure sensor 67, may have a tap 72 to flow channel 69.

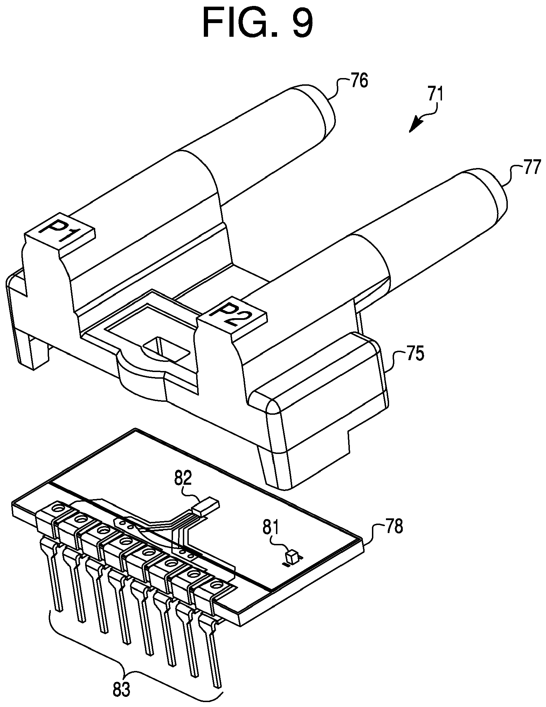

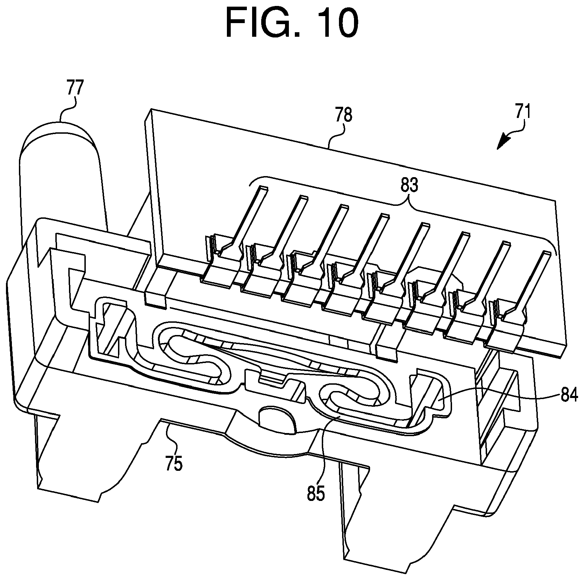

Figure 9 is a diagram of an exploded view of a product version of an airflow sensor 71 with a barometric pressure sensor. A portion 75 may have an inlet port 76 and on outlet port 77. Portion 75 may fit on and be attached to portion 78 to form one unit of sensor 71. Portion 78 nay have a pressure sensor 81 situated on it. An airflow sensor 71 may also have a flow sensor 82 and electronics situated on portion 78. Terminals 83 may provide connections to pressure sensor 81, flow sensor 82 and electronics. While Figure 9 shows an upper view of airflow sensor 71, Figure 10 shows a lower view of airflow sensor 71. A cavity 84 may be present for pressure sensor 81. Cavity 84 may have a tap into a flow channel 85. Cavity 84 is not necessarily limited to a particular location for a tap into channel 85.

A table, equations and solutions relevant to flow rate of an airflow sensor are indicated below. Many of these items may be in the public domain. A flow path through the sensor may behave as a combination of pipe and orifice type flow.

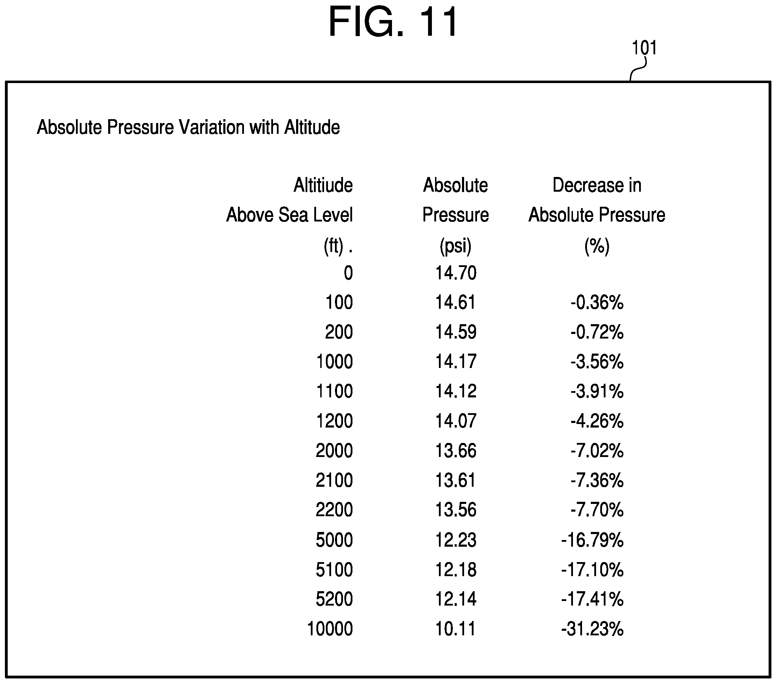

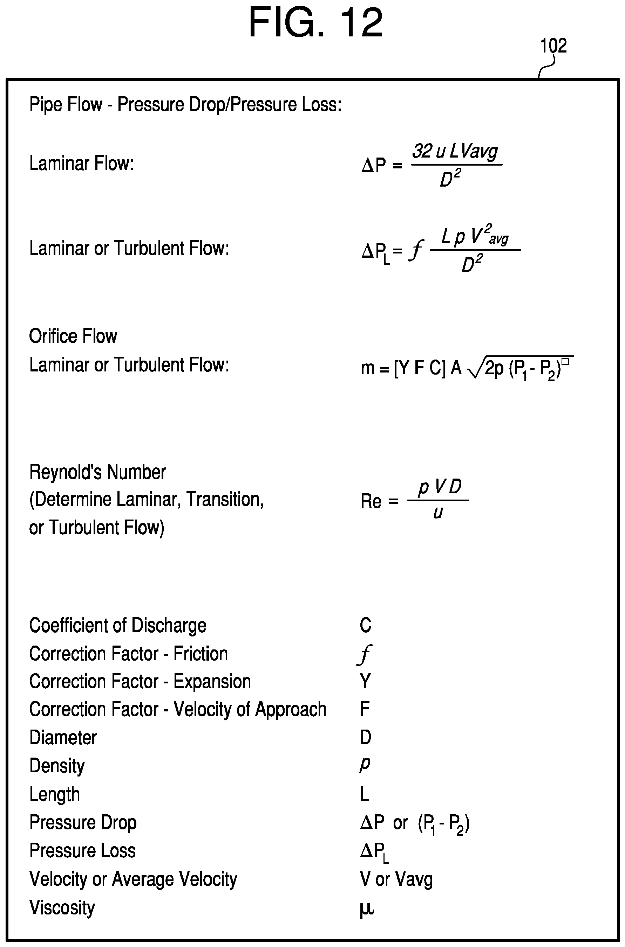

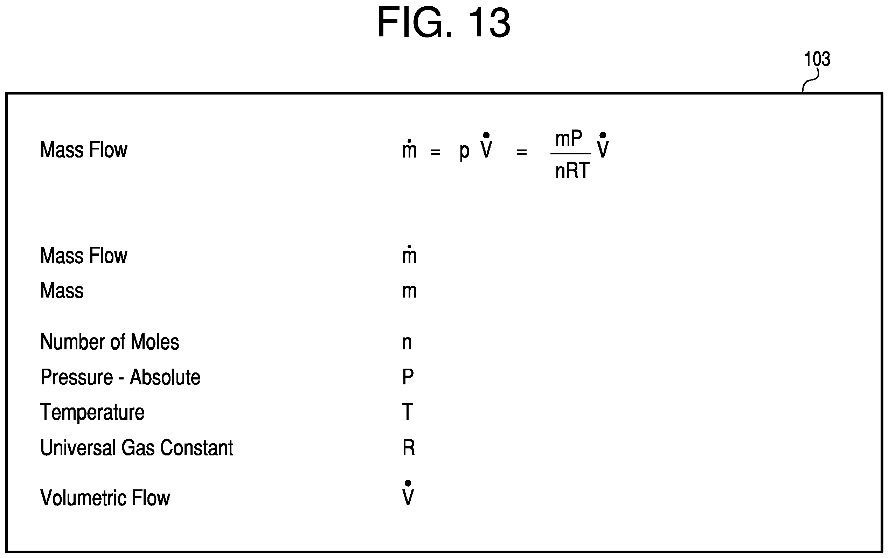

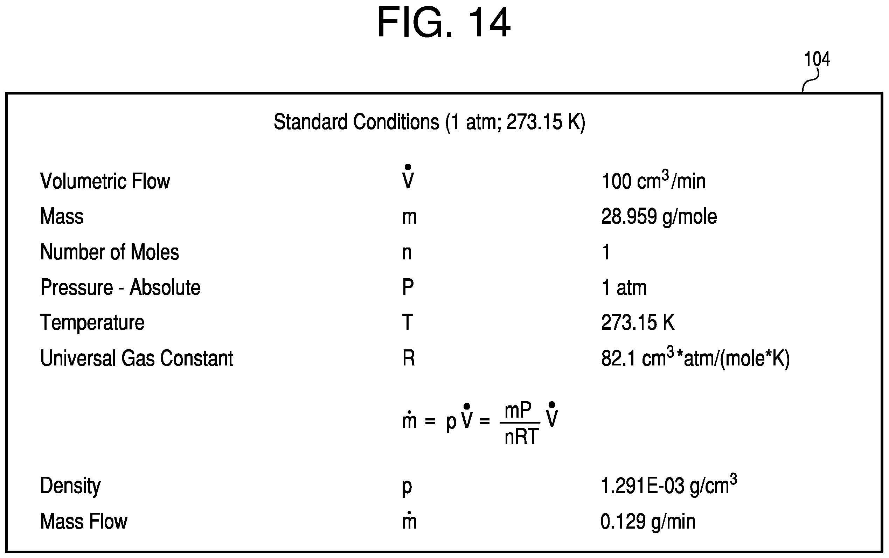

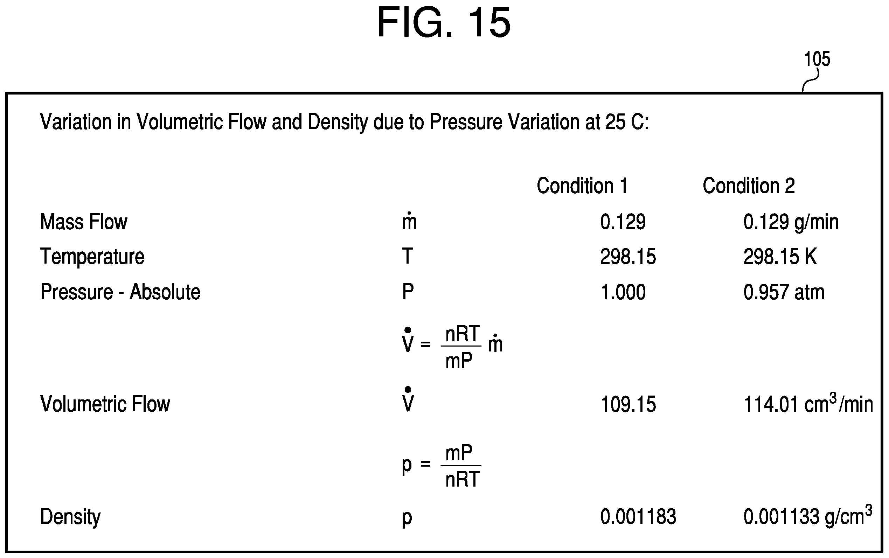

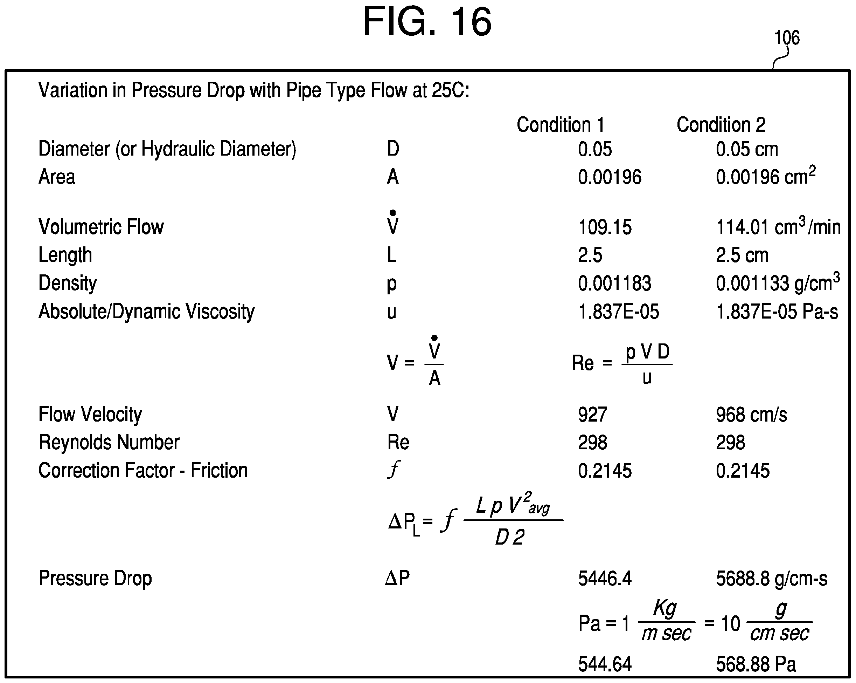

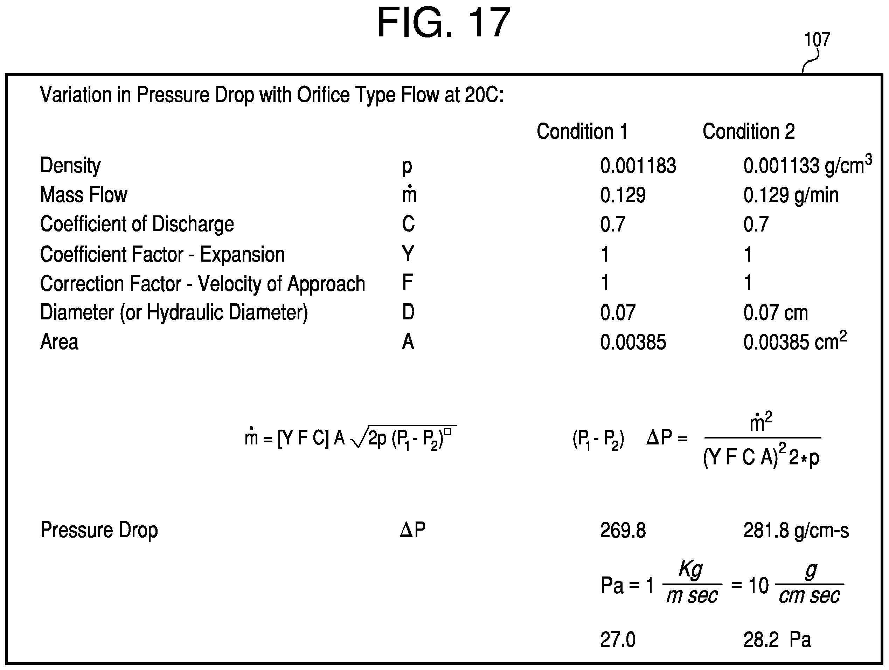

Figure 11 is a table 101 showing absolute pressure and variation with altitude. Figure 12 reveals a diagram 102 of equations related to pressure drop or loss of a pipe flow and orifice flow. Figure 13 is a diagram 103 of an equation pertaining to mass flow. Figure 14 is a diagram 104 revealing standard conditions and a calculation for mass flow. Figure 15 is a diagram 105 that shows calculations which note variation in volumetric flow and density due to pressure variation at 25 degrees C. Figure 16 is a diagram 106 indicating a variation in pressure drop with a pipe type flow at 25 degrees C. Figure 17 is a diagram 107 showing a variation in pressure drop at 20 degrees at 20 degrees C.

One may note at a given mass flow rate, a pressure drop may be affected by density of the fluid. It seems that if one has a measured delta pressure between the two ends of the pipe, then the mass flow rate may be calculated. There may be other bases for calculations. Another delta pressure may between a tap to the first end of the pipe, and still another pressure delta may be between the tap and the second end of the pipe. These mass flow rates may be used to verify or compensate a flow sensor reading of the fluid flow through the channel of the sensor assembly. If all of the variables, except density, are known, then density may be calculated and aid in identifying the fluid. If there is just one unknown, then of course it may be calculated.

When a mass flow sensor is calibrated to pressure drop, an issue is that delta pressure may fluctuate with density changes. So a purpose of adding a pressure sensor may be to adjust for changes in atmospheric pressure, such as from weather changes, altitude, and even local effects in test equipment.

Since the location of pressure sensor is relatively close to the airflow sensor, an error from a small difference in pressure in the flow path can be calibrated out. The pressure sensor may still track atmospheric pressure.

To recap, a flow sensor assembly may incorporate a housing having a channel, an input port connected to a first end of the channel, an output port connected to a second end of the channel, a mass flow sensor situated in the channel, an absolute pressure sensor having a configuration so that the absolute pressure sensor can detect absolute pressure in the cavity, and an electronics module connected to the absolute pressure sensor and the mass flow sensor. Mass flow rate signals from the mass flow sensor may be sent to the electronics. The electronics may provide an indication of a mass flow rate of a fluid in the channel according to the flow rate signals. Absolute pressure signals from the absolute pressure sensor may be sent to the electronics. The electronics may compensate the indication of the mass flow rate according to the absolute pressure signals.

The mass flow sensor and the pressure sensor may be integrated as a single unit.

The housing and the single unit may be fabricated as one or more dies with MEMS fabrication techniques.

The channel may extend in a direction from the first end of the channel along a straight path to the second end of the channel.

The channel may exhibit a circuitous path with one or more bends from the first end of the channel to the second end of the channel.

The mass flow sensor may incorporate a first thermal sensor and a second thermal sensor.

Temperature data may go from the first thermal sensor and second thermal sensor to the electronics.

The electronics may calculate the mass flow rate of the fluid from temperature signals of the first thermal sensor and the second thermal sensor.

The mass flow sensor may further incorporate a heater upstream from at least one of the first and second thermal sensors.

The electronics may incorporate a processor and a memory. The memory may contain one or more items selected from a group incorporating one or more lookup tables and one or more algorithms. The processor may incorporate an analog-to-digital converter (ADC) having inputs connected to the mass flow sensor and the absolute pressure sensor. The processor may digitally determine a compensated mass flow rate of a fluid in the channel from the mass flow rate signals and channel pressure signals as digitized from the outputs of the ADC, in conjunction with the one or more items selected from the group comprising one or more lookup tables and one or more algorithms.

The configuration of the absolute pressure sensor may incorporate a cavity in the housing connected to the channel via a tap, and an absolute pressure detection element situated in the cavity.

The tap to the channel may be at a location between the first end and the second end of the channel.

The location of the tap may be situated as close as possible to the flow sensor.

An error in a pressure indication of a fluid in the channel due to a distance of the tap from the mass flow sensor may be calibrated out.

A compensated flow sensor may incorporate a flow channel having an in port at a first end and an out port at a second end, a mass flow sensor situated in the flow channel, an absolute pressure sensor situated adjacent to the flow sensor, and a controller having inputs for connection to outputs of the mass flow sensor and the absolute pressure sensor, and having an output for an indication of a mass flow rate of a fluid in the channel. The indication of the mass flow rate may be compensated by the controller according to an amount of absolute pressure detected by the absolute pressure sensor.

The controller may implement one or items from a group incorporating a look-up table and an algorithm.

The mass flow sensor and the absolute pressure sensor may be integrated as a unit device.

The mass flow sensor may be a MEMS fabricated device.

An approach for detecting a fluid flow rate in a channel may incorporate situating a fluid flow sensor in a channel, situating an absolute pressure sensor in the channel, processing measurements from the fluid flow sensor and the absolute pressure sensor of a fluid in the channel, calculating a flow rate based on processed measurements from the fluid flow sensor, and compensating the flow rate based on processed measurements from the absolute pressure sensor. The fluid flow sensor and the absolute pressure sensor may be situated adjacent to each other in the channel.

The approach may further incorporate situating a temperature sensor in the channel, processing measurements from the temperature sensor, and compensating the flow rate based on processed measurements from the temperature sensor.

U.S. Patent Application Serial No. 14/800,492, filed July 15, 2015, is hereby incorporated by reference. U.S Patent No. 7,647,842, issued January 19, 2010, is hereby incorporated by reference. U.S Patent No. 8,418,549, issued April 16, 2013, is hereby incorporated by reference. U.S Patent No. 8,695,417, issued April 15, 2014, is hereby incorporated by reference.

Any publication or patent document noted herein is hereby incorporated by reference to the same extent as if each publication or patent document was specifically and individually indicated to be incorporated by reference.

In the present specification, some of the matter may be of a hypothetical or prophetic nature although stated in another manner or tense.

Although the present system and/or approach has been described with respect to at least one illustrative example, many variations and modifications will become apparent to those skilled in the art upon reading the specification. It is therefore the intention that the appended claims be interpreted as broadly as possible in view of the related art to include all such variations and modifications.

## Claims

1. A flow sensor assembly comprising:
a housing having a channel;
an input port connected to a first end of the channel;
an output port connected to a second end of the channel;
a mass flow sensor situated in the channel;
an absolute pressure sensor having a configuration so that the absolute pressure sensor can detect absolute pressure in the cavity; and
an electronics module connected to the absolute pressure sensor and the mass flow sensor; and
wherein:
mass flow rate signals from the mass flow sensor are sent to the electronics;
the electronics provides an indication of a mass flow rate of a fluid in the channel according to the flow rate signals;
absolute pressure signals from the absolute pressure sensor are sent to the electronics; and
the electronics compensates the indication of the mass flow rate according to the absolute pressure signals.

2. The assembly of claim 1, wherein:
the mass flow sensor and the pressure sensor are integrated as a single unit; and
the housing and the single unit are fabricated as one or more dies with MEMS fabrication techniques.

3. The assembly of claim 1, wherein the channel extends in a direction from the first end of the channel along a straight path to the second end of the channel.

4. The assembly of claim 1, wherein the channel exhibits a circuitous path with one or more bends from the first end of the channel to the second end of the channel.

5. The assembly of claim 1, wherein:
the mass flow sensor comprises a first thermal sensor and a second thermal sensor; and
temperature data go from the first thermal sensor and second thermal sensor to the electronics.

6. The assembly of claim 5, wherein:
the electronics calculates the mass flow rate of the fluid from temperature signals of the first thermal sensor and the second thermal sensor; or
the mass flow sensor further comprises a heater upstream from at least one of the first and second thermal sensors.

7. The assembly of claim 1, wherein:
the electronics comprises a processor and a memory;
the memory contains one or more items selected from a group comprising one or more lookup tables and one or more algorithms;
the processor comprises an analog-to-digital converter (ADC) having inputs connected to the mass flow sensor and the absolute pressure sensor; and
the processor digitally determines a compensated mass flow rate of a fluid in the channel from the mass flow rate signals and channel pressure signals as digitized from the outputs of the ADC, in conjunction with the one or more items selected from the group comprising one or more lookup tables and one or more algorithms.

8. The assembly of claim 1, wherein:
the configuration of the absolute pressure sensor comprises:
a cavity in the housing connected to the channel via a tap; and
an absolute pressure detection element situated in the cavity; and
wherein the tap to the channel is at a location between the first end and the second end of the channel.

9. The assembly of claim 8, wherein the location of the tap is situated as close as possible to the flow sensor.

10. The assembly of claim 8, wherein an error in a pressure indication of a fluid in the channel due to a distance of the tap from the mass flow sensor is calibrated out.

11. A compensated flow sensor comprising:
a flow channel having an in port at a first end and an out port at a second end;
a mass flow sensor situated in the flow channel;
an absolute pressure sensor situated adjacent to the flow sensor; and
a controller having inputs for connection to outputs of the mass flow sensor and the absolute pressure sensor, and having an output for an indication of a mass flow rate of a fluid in the channel; and
wherein the indication of the mass flow rate is compensated by the controller according to an amount of absolute pressure detected by the absolute pressure sensor.

12. The sensor of claim 11, wherein the controller implements one or items from a group comprising a look-up table and an algorithm.

13. The sensor of claim 11, wherein the mass flow sensor and the absolute pressure sensor are integrated as a unit device.

14. The sensor of claim 11, wherein the mass flow sensor is a MEMS fabricated device.

15. A method for detecting a fluid flow rate in a channel comprising:
situating a fluid flow sensor in a channel;
situating an absolute pressure sensor in the channel;
processing measurements from the fluid flow sensor and the absolute pressure sensor of a fluid in the channel;
calculating a flow rate based on processed measurements from the fluid flow sensor; and
compensating the flow rate based on processed measurements from the absolute pressure sensor; and
wherein:
the fluid flow sensor and the absolute pressure sensor are situated adjacent to each other in the channel;
a temperature sensor is situated in the channel;
measurements from the temperature sensor are processed; and
the flow rate is compensated based on processed measurements from the temperature sensor.
